(19) Europäisches Patentamt
European Patent Office
Office européen des brevets

(11) **EP 2 519 111 B1**

(12) **EUROPEAN PATENT SPECIFICATION**

(45) Date of publication and mention
of the grant of the patent:
**17.10.2018 Bulletin 2018/42**

(51) Int Cl.:
*A23B 7/02* *(2006.01)*     *A23B 7/022* *(2006.01)*
*A23L 19/00* *(2016.01)*     *A23L 2/70* *(2006.01)*
*A23L 27/10* *(2016.01)*     *A23L 27/14* *(2016.01)*
*A23L 27/16* *(2016.01)*     *A23L 31/00* *(2016.01)*
*A23P 10/20* *(2016.01)*     *A23L 27/00* *(2016.01)*

(21) Application number: **10776670.1**

(22) Date of filing: **09.11.2010**

(86) International application number:
**PCT/EP2010/067079**

(87) International publication number:
**WO 2011/079998 (07.07.2011 Gazette 2011/27)**

(54) **METHOD FOR MAKING GRANULATED AROMATIC PLANT PRODUCTS**

HERSTELLUNGSVERFAHREN FÜR GRANULIERTE AROMATISCHE PFLANZENPRODUKTE

PROCÉDÉ DE FABRICATION DE PRODUITS DE PLANTES AROMATIQUES GRANULÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2009 CN 200910217105**

(43) Date of publication of application:
**07.11.2012 Bulletin 2012/45**

(73) Proprietor: **Nestec S.A.**
**1800 Vevey (CH)**

(72) Inventors:
• **LIAN HWEE PENG, Rebecca**
**Minhang District**
**Shanghai (CN)**

• **SHEN, Dong**
**Shanghai (CN)**
• **ULMER, Helge**
**Shanghai (CN)**

(74) Representative: **Mollet, Beat Max et al**
**Nestec S.A.**
**Centre de Recherche Nestlé**
**Vers-chez-les-Blanc**
**Case Postale 44**
**1000 Lausanne 26 (CH)**

(56) References cited:
**EP-A1- 1 949 795**     **EP-A2- 0 446 147**
**DE-U1-202005 018 804**     **GB-A- 2 114 865**
**US-A- 4 361 589**     **US-A- 5 227 183**

Description

TECHNICAL FIELD

The present invention generally relates to a granulated aromatic plant product composed of aromatic plants and osmotic agent, which exhibit very authentic and natural color, flavor, and aroma similar to that of the fresh cut plant. The present invention relates to the method of preparation of such product.

BACKGROUND OF THE INVENTION

Aromatic plants/herbs have been valued for their aroma and flavor in food preparation for centuries. Since fresh herbs are seasonal and have a short shelf-life, they have been preserved by many methods. In the past, the most common methods of preservation generally have involved removal of moisture (drying) or concentration of herb solids in order to reduce the possibility of microbial growth and spoilage. Other known methods for herb preservation involve salting or soaking in a brine solution, as well as solar or oven dehydration. Attempts to reduce the loss of volatile herb flavor, aroma and color during dehydration have involved alternative, more expensive methods such as freeze drying and vacuum drying.

However, all these dehydration methods result in deterioration in the quality of the fresh herb, in particular the color, flavor, aroma and overall appearance of the fresh herb is significantly impaired. Furthermore, it has long been recognized that dehydrated herbs undergo oxidation during storage resulting in further discoloration (browning) and further loss or undesirable alteration of fresh herb flavor, color and aroma. Oxidation of dehydrated herbs during storage has been somewhat curtailed through the use of chemical anti-oxidants. The addition of such chemicals is generally undesirable and may also incorporate into the food an unwanted chemical taste. Dehydration by hot air or by pickling destroys the fresh appearance and in particular the color of the herb due to herb cellular damage and enzymatic browning. This can be explained somewhat by the decomposition of the chlorophyll. Preservation by air drying at elevated temperatures also causes the loss of many of the volatile flavor components as well as the generation of off-flavors such as fish, hay and tea notes.

US Patent 5,227,183 takes aim at preserving flavor and aroma of aromatic plants whiling extending their useful shelf-life in such products. In the process disclosed by the patent, the fresh plants were blanched with humectant solution under a temperature not less than 180 □. Blanching helps to inactivate enzymes so that the enzymatic action is stopped and flavoring compounds do not decompose. However, a flavor that is generated without enzymatic action exhibits a "dried" flavor, which is not so favorable than those fresh cut plants that release authentic fresh flavors. Although the product obtained in Patent 5,227,183 maintains a long shelf-life by inactivating enzymes during the preparation, it fails to provide flavors as those fresh plants release.

Also in US Patent 5,227,183, osmotic agents are used for forming an amorphous film over the plant tissue and, in particular, over the oil sacs or glands in these herbs. The amorphous film is able to prevent the components in sacs and glands to escape to the surrounding atmosphere. And it may be effective to limit the oxygen exposure to reduce the lipid oxidation which causes undesirable flavor. The use of osmotic agents make aromatic plants retains color, flavor and aroma for long time.

UK Patent Application GB 2114865A focuses on providing a dried aromatic plant product with satisfactory mechanical properties, in particular sufficient shear and storage stability. The aromatic plants are mixed as uniformly as possible with saturated salt solution so that the aromatic plants, even with poor drying properties, can be dried using common vacuum drying. The salt carrier can be wholly or partially replaced by sugars, proteins and/or hydrogenated oligo- and/or polysaccharides. In preparing the aromatic plants of the application, fast and uniform heating and/or blanching is used for stabilizing the fresh aromatic plants, which is believed to keep the flavoring compounds. The aromatic plants reconstituted in aqueous liquids, in terms of flavor and color, are similar to freshly harvested comminuted aromatic plants even after prolonged storage.

In summary, prior art endeavors in the extension of shelf-life or the good mechanical properties of such aromatic plant product. The adverse impact of such processes on the characteristics of aromatic plant products is not so favorable aroma and/or flavor. There are marketing demands for fresh flavorful and appearing products. In short, the prior art has long recognized a need for a simple method for preserving the fresh characteristics of aromatic plants having their flavor and/or aroma characteristics contained in oil or flavor glands, sacs and the like tissues.

SUMMARY OF THE INVENTION

The present invention meets the above demands by providing a method for preparing an aromatic plant product in granular form which will upon rehydration readily dissolve and exhibit freshness characteristics such as authentic and natural aroma, color, and appearance of fresh cut edible plants. The present invention provides a method for treating freshly harvested aromatic plants so that the important qualities as above will be retained.

The aromatic plant product prepared by the method of the present invention is composed of aromatic plants and osmotic agents. The aromatic plants of the product can be any herbs or vegetables of aroma and/or flavor, such as celery, mushroom, coriander, basil, parsley, ginger. Preferably, the aromatic plants are selected from those of genus Allium, including onions (A. cepa), shallots (A. oschaninii), leeks (A. ampeloprasum), scallions (A. ascalonicum), garlic (A. sativum) and chives (A. schoenoprasum). And the aromatic plants account for at least 0.5 w/w% dry matter up to 48 w/w% dry matter, preferably from 0.55 w/w% dry matter up to 10 w/w% dry matter, more preferably from 0.55 w/w% dry matter up to 5 w/w% dry matter, and most preferably from 0.55 w/w% dry matter up to 1 w/w% dry matter of the product.

The osmotic agent of the invention is salt that could create osmotic pressure difference sufficient to cause the moisture to immediately migrate out of the plant cells, and is preferably sodium chloride or MSG or their mixture.

The aromatic plant product of the present invention is in a granulated form and the aromatic plants are encapsulated in the osmotic agents. The granule size of the product is from 0.8 mm to 5.0 mm, preferably from 1.2 mm to 3.5 mm in either length or diameter.

A peroxidase or polyphenol oxydase activity determined for the aromatic plants in the final product of the present invention is at least 15 %, preferably at least 25 %, and more preferably at least 35 % of that of their corresponding fresh aromatic plants.

The object of the present invention is to provide a method for preparing the granulated aromatic plant product mentioned as above. The present inventors found such product could be obtained through certain process comprising steps of: milling fresh aromatic plants; mixing the above obtained aromatic plant with osmotic agent under moisture up to 30 % and temperature of -10°C to 65°C, so as to form an viscous mixture; granulating the obtained mixture to obtain the granules; drying the granules to have a moisture of 0.5 to 5.0 %.

The method of the present invention may further comprise steps of washing the fresh aromatic plants and making the plants surface disinfected and sliced or chopped before milling.

A further object of the present invention is to describe a savoury/seasoning/bouillon composition comprising the granulated aromatic plant product described above, as well as a finished or intermediate food/beverage product prepared by using the granulated aromatic plant product.

These and other objects of this invention will become apparent from the following disclosure.

## DETAILED DESCRIPTION OF THE PREFERRED EMBODIMENTS

The granulated aromatic plant product prepared by the method according to the present invention is composed of aromatic plants and osmotic agent.

Term aromatic plant is used to denote those plants having specialized tissues which contains aromatic components possessing strong flavor and aroma. Such aromatic plants include herbs such as celery, mushroom, coriander, basil, parsley, ginger and the like, many of which are characterized by oil sacs or glands which contain the flavor and aroma values of the plant. Additionally they preferable contain vacuoles filled with enzymes, which in case of rupture of the plan cells transform precursors into flavor and aroma compounds characteristic for freshly cut aromatic plants. Aromatic plants such as herbs are prized primarily for their color, flavor and aroma. In these plants, enzymatic action causes a rapid deterioration in color and aroma. The preferable aromatic plants used for the present invention are plants from genus Allium, including onions (A. cepa), shallots (A. oschaninii), leeks (A. ampeloprasum), scallions (A. ascalonicum), garlic (A. sativum) and chives (A. schoenoprasum). The product using plants from genus Allium as the aromatic plants have particularly high enzymatic activity (e.g. peroxidase, alliinase), which means much authentic aroma as that of fresh plants. The aromatic plants may be one of the listed above or any of their combination.

Term osmotic agent refers to compounds that could create high osmotic pressure sufficient to cause moisture to migrate from the plant cell to the outside. The osmotic agent can be dried to form a non-crystalline or amorphous coating over the plant tissue and, in particular, over the oil sacs, glands and vacuoles in those herbs having same. The osmotic agents used in the present invention are those commonly used in food industry and there is no particular restriction. Salts are the most known osmotic agent, for example, sodium chloride or MSG or a mixture thereof

The granulated aromatic plant product prepared by the method according to the present invention comprises at least 0.5% up to 48% by weight of dry matters with the remainder of osmotic agents. Preferable ranges for fresh ingredients are 0.55 to 10 % by weight of dry matters with the remainder of osmotic agents. More preferable ranges for fresh plant ingredients are from 0.55 to 5 % by weight of dry matters, and most preferable ranges for fresh plant ingredients are from 0.55 to 1 % by weight of dry matters. And the final product has a moisture content of no more than 5.0 %. In a particularly preferred embodiment, the product has a moisture content of from about 2% to 5%. It has been found that at water content of about 5% or less the encapsulation can be formed well.

The aromatic plants comprised in the aromatic plant product according to the method of the present invention are encapsulated in the osmotic agents. Here, term encapsulating means that osmotic agent forms an amorphous coating that substantially covers the oil sacs, glands and vacuoles of the aromatic plants. It is impossible to encapsulate all the tissues and oil sacs or glands due to the damage during the preparing process. However, if enough plant tissue and oil sacs and glands are encapsulated, more enzymes, peroxidase, polyphenol oxidase, and alliinase (for genus Allium) especially, will be solidified within the tissue and oil sacs or glands. It is preferred, therefore, that the encapsulation be as complete as possible where a product which compares favorably with the fresh aromatic plant is desired.

Peroxidase is a hydrogen-peroxide-reducing enzyme, occurring in animal and plant tissues with large numbers, which is of high activity and catalyzes the dehydrogenation (oxidation) of various substances in the presence of hydrogen peroxide. Polyphenol oxidase is another enzyme present in animal and plant tissues where it catalyses the oxidation of various phenolic compounds. Therefore, the more enzymatic activity, as represented here by peroxidase or polyphenol oxidase, is retained in the aromatic plant, the more overall freshness as aroma and flavor is released when the aromatic plant gets cut. In the aromatic plant product prepared by the method according to the present invention, the oxidase enzymes are not inactivated but solidified within the plant, resulting in a much more authentic freshness than the conventional product where enzymes are inactivated via e.g. blanching. When the aromatic plant product is rehydrated with water, the true aroma and flavor does come out again due to the transformation of flavoring compounds within the plant cells. The aromatic plants comprised in the final product have a peroxidase or polyphenol oxidase activity that is at least 15% of their corresponding fresh aromatic plants. Preferably, the aromatic plants in the final product have a peroxidase or polyphenol oxidase activity of at least 25%, and even more preferably of at least 35% of their corresponding fresh aromatic plants.

Alliinase is a unique enzyme found in plants of genus Allium. Alliinase is responsible for catalyzing chemical reactions that produce the volatile chemicals that give these plants their flavors, odors, and tear-inducing properties. In onions, for example, the alliinase enzyme acts on the chemical alliin converting it into allicin. Thus, authentic and natural aroma is ensured upon re-hydration by retaining Alliinase as possible within the product. The aromatic plants of genus Allium comprised in the final product prepared by the method according to the present invention have an alliinase activity that is at least 15% of their corresponding fresh aromatic plants of genus Allium. Preferably, the aromatic plants genus Allium in the final product have an alliinase activity of at least 25%, and even more preferably of at least 35% of their corresponding fresh aromatic plants of genus Allium.

The aromatic plant product prepared by the method according to the present invention has a granulated form, which has a granule size of 0.8 mm to 5.0 mm in either length or diameter. If the granule size of the aromatic plant product is more than 5.0 mm in length or diameter, the granule becomes brittle and easy to get smashed during transportation and/or storage. Additionally, too big granules need more time to dissolve in water and other aqueous solutions. On the other side, the granule of the aromatic plant product should not be too small and preferably has a length or diameter not less than 0.8 mm. If the granule size of the product is less than 0.8 mm, the granule becomes easy to conglomerate in water and hard to get fully dissolved even with stirring. Besides, product of fine granules has strong hygroscopicity. Thus, powdery product will absorb moisture from the air and get hydrated, resulting deterioration of the product and shorter shelf life. Therefore, it raises much higher requirements for the package and transportation of the product. Preferably, the aromatic plant product prepared by the method according to the present invention has a size of 1.2 mm to 3.5 mm in either length or diameter. Although it is not critical for the invention, the product having uniform granule size is preferred, considering further improved dissolvability and flowability.

The aspect of the present invention relates to a method for preparing the granulated aromatic plant product described above, comprising steps of:

- milling fresh aromatic plants;
- mixing the above obtained aromatic plant with osmotic agent under moisture up to 30 % and temperature of -10 to 65 °C, so as to form an viscous mixture;
- granulating the obtained mixture to obtain the granules;
- drying the granules to have a moisture of 0.5 to 5.0 %.

Fresh aromatic plants are harvested and preferably kept cool prior to processing to prevent enzymatic degradation. Prior to subjecting the aromatic plant to the milling step, one may wash and surface disinfect the plant to remove dirt, debris and other organic matter which increases the microbial content of the herb. Such washing may comprise spraying the plants with or immersing them in water, a water-detergent, or water-wetting agent mixture to remove such dirt, etc. If detergent or other wetting agent is used, the plants should be rinsed to remove residual detergent/wetting agent. Excess water from the washing step should also be removed. The surface disinfection may also be carried out independently after washing step. Techniques for surface disinfection of plants should be capable of keeping the plant intact while achieving the disinfection purpose, and can be those conventionally used techniques.

In carrying out the disclosed method above, the freshly harvested plants may be pretreated by separating the leaves from the stems, depending on the specific plant treated. The fresh plant may be further sliced to small pieces for preparation for subsequent milling step. This separating and/or slicing process may be accomplished by any acceptable manner known to those skilled in the art. For example, gentle strip-cutting of the whole fresh plant into pieces may be carried out using a cutter.

The washed and sliced fresh aromatic plant is then subjected to milling step. Any acceptable milling/grinding method known in the food industry can be used for milling the plants. Since the plants are fresh and contain mostly moisture, it is preferred to use wet milling or colloid milling. A colloid mill can reduce the particle size of a solid in suspension in a liquid, by applying hydraulic shear to the processed liquid. Excessive milling time and/or shearing are to be avoided to limit aromatic plant cell rupture.

The mixing of milled aromatic plant with osmotic agent can be realized by using any kind of mixer known in the art. The osmotic agent used must be able to dehydrate the herb being treated and create high osmotic pressure discussed previously. The most preferable agents for this purpose are sodium chloride or MSG and/or mixtures thereof. To some degree the choice of the osmotic agent depends on its cost and commercial availability. In addition, the osmotic agent can be pre-milled to fine powders so that the fresh plant may fully surrounded by the osmotic agent. The mixing makes the milled fresh plants encapsulated by powdery osmotic agent.

The mixing ratio of fresh plants to osmotic agent is from 5:95 to 90:10 by weight. Since the fresh plant contains about 90% of water that would be evaporated, the final dried product would contain 0.5% up to 48% by weight of dry matters of plants. The duration of mixing should be sufficient to obtain a uniformly dispersed mixture and preferably lasts from 0.1 to 60 minutes. The mixture obtained is a viscous material, which is then subjected to the granulation process.

It is not particularly restricted to the granulation method concerning the granulation step, which may any one selected from sifting, high shear granulation, fluidized bed granulation, Extrusion-Spheronization granulation, spray drying granulation, tablet compression, and roller compaction. According to the method of the present invention, the granulation process generates granules having a length or diameter of between 0.5 to 5 mm. As mentioned above, too large or too small granule will be problematic with dissolution and transportation or storage.

The processes described above may be carried out in an ambient temperature. In a preferable embodiment of the present invention, the temperature for milling, mixing and granulating has a range from -10 to 65 degrees, and preferably from -5 to 60 degrees. Apparently, high temperature will deteriorate the enzymes, which is not expected in the invention. Relatively low temperature helps to solidify the enzymes and enzymes are unable to degrade the flavoring compounds within the plants temporarily.

The drying conditions are not critical but must be sufficient to reduce the water content in the finished product, so that an amorphous film encapsulating the oil sacs or glands of the plants can be formed. The drying temperature is not particularly limited and could vary within the range that a skilled one in the art could adjust according to his basic skill. For example, if it is a relatively high temperature for drying, the drying duration should be relatively short so that the temperature inside the granule will not reach to the degree that enzyme is inactivated. It has been found that at water content of about 5% or less such amorphous films are formed. Excessive drying below about 0.5% may be detrimental to flavor and cause texture degradation. Conventional drying techniques including air drying, air convection drying, fluidized bed drying, vacuum drying, freeze drying, solar drying and the like may be employed to achieve the desired final water content.

Although the process can be carried out in batch form, it is preferred that the process be substantially continuous so that, as is customary in production facilities, the speed of the throughput conveyors will be set to accommodate the step in the process requiring the greatest dwell time. In handling of freshly harvested plants, it will be appreciated by those skilled in the art that for different plants, different specific treatment parameters throughout the steps of the process may be required.

Microscopic and flavor profile examinations of the finished product confirmed that the product retains its characteristic fresh color and flavor. Upon rehydration, color, flavor, aroma, and overall appearance are very similar to fresh cut aromatic plants. Sensory evaluation descriptive panels indicated that herbs prepared in the above manner are more similar to fresh aromatic plants than conventionally processed products.

This product can also be suitable for other food applications where fresh color and flavor are of primary concern. That is, the aromatic plant product according the invention can be further used for preparing savoury/seasoning/bouillon composition, and finished or intermediate food/beverage product. It is further contemplated that product made by the method of the present invention could be used in a variety of food applications.

The examples which follow are intended to illustrate and explain the present invention but are not intended to be limiting in any way to the subject matter of the claims.

**EXAMPLES**

The test methods of POD and PPO Activity are described below.

**The POD Activity**

Experimental steps

1. Peroxidase extraction: Add 5g samples into the mortar, then adding 20ml of phosphate buffer, grinding 3min, leaching the mortar twice with 10ml PBS, infunde into the funnel, after filtration put the clear Peroxidase solution into the plastic tube, then stored at 4□ refrigerator.

2. Determination of peroxidase activity: Take 3 test-tube, adding 3 mL reaction mixture and 1 mL phosphate buffer in one test tube, as control; and the other by adding 3 mL reaction mixture and 1mL clear Peroxidase solution, infunde into the measuring cup immediately after shock. Determination the absorbance values in the spectrophotometer at wavelength of 470 nm, readings the absorbance values once every 1 min, and a repeated measure is needed.

The peroxidase activity can be expressed as Absorbance change values per minute, $\Delta A_{470}/[g \cdot \min (\text{sample})]$.

$$\text{Peroxidase activity } [U / (g \cdot \min)] = \frac{\Delta A_{470} \times V_T}{t \times V_s \times W}$$

Where:

$\Delta A_{470}$ - Reaction time changes in absorbance.
$W$ - plant fresh weight, g.
$V_T$ - the total volume of enzyme extract, mL.
$V_s$ - Determination of when access to the volume of enzyme solution, mL.
$t$ - reaction time, min.

**The PPO Activity**

5g sample was added into the mortar, grinding for 5 min, and adding 20 ml of phosphate buffer gradually, leaching the mortar three times with 30ml PBS, infunde the extracting solution into the funnel, after filtration the clear enzyme solution was added into the plastic tube, and centrifuged at 5,000 rpm for 10 min at 4 °C. The supernatant was concentrated by freeze drying. Different concentrations were used to assay the PPO activity. The activity was determined by measuring the initial rate of quinone formation at room temperature (30°C), as indicated by an increase in absorbance at 420 nm. An increase in absorbance of 0.001 $\min^{-1}$ was taken as 1 unit of enzyme activity. The increase in absorbance was recorded every 10 s for 2 min and was linear with time for the first 30 s. The sample cuvette contained 0.6 ml of substrate solution (40 mM catechol) and 0.2 ml of the enzyme solution. PPO activity was assayed in triplicate measurements. The blank sample was water.

$$PPO\ activity = \frac{\Delta A_{420}}{t \times n}$$

$\Delta A_{420}$ : The values of absorbance changes in the reaction time;
$t$ - Reaction time, min;
$n$- Concentration multiple.

**EXAMPLE 1**

9 kg de-rooted fresh spring onion was milled and subsequently mixed with 75 kg milled sodium chloride and 45 kg milled MSG for 0.5 min under 5 °C. The mixture was then granulated to have a granule size of 2 mm, and fluidized bed dried for 0.5 min at 105 °C of hot air. The final product has a moisture content of 2.5%. The amount of spring onion was 7.0 % of wet ingredient in the recipe which corresponded to 0.75 w/w% of dry matter of the total final product.

The finished product was greenish in color, and upon rehydration the solution exhibited the characteristic aroma and comminuted appearance of freshly cut spring onion.

**Comparative EXAMPLE 1**

Same fresh spring onion in Example 1 was used for preparing conventional plant product according the methods disclosed in GB 2114865A and commonly used in herbs and spices manufacturing industry. The sliced spring onion was hot air dried at 90 °C for one hour, followed by a phase of 80 °C for 120 min and then was mixed with salts and water. The obtained mixture was granulated to particles of 2.5 mm in length and 1.5 mm in diameter. The granules were then fluidized bed dried under same condition as in Example 1.

Such obtained particles dissolved in water exhibited much less fresh onion aroma than the product of the present invention. The present invention exhibited strongly the freshness in flavor, which is perceived during cutting and chopping onions in kitchen preparation without any cooked or boiled impression. Additionally the product lacks the typical "hay" or "dried herb" tonality, which is perceived for dried herbs and spices.

**EXAMPLE 2**

3.5 kg washed coriander and 2.5 kg of freshly cut ginger were milled and subsequently mixed with 108 kg milled salt for 1 min under -2°C. The mixture was granulated to have a granule size of 0.5 mm, and fluidized bed dried for 1 min at 110 °C of hot air. The final product has a moisture content of 0.5%. The amount of coriander and ginger was 5.3 % of wet ingredient in the recipe which corresponded to 0.56 w/w% of dry matter of the total final product.

The finished product was strong in aroma and taste for the coriander and ginger and upon re-hydration the solution exhibited a lot of flavouring characteristic aroma of freshly cut coriander and ginger.

**Comparative EXAMPLE 2**

Same coriander and ginger as in Example 2 were used for preparing conventional plant product according the methods disclosed in GB 2114865A and commonly used in herbs and spices manufacturing industry. The washed coriander and cut ginger were hot air dried at 90 °C for one hour, followed by a phase of 80 °C for 120 min and then were mixed with salts and water. The obtained mixture was granulated to particles of 2.5 mm in length and 1.5 mm in diameter. The granules were then fluidized bed dried under same condition as in Example 2.

Products prepared in both Example 1 and 2 and Comparative Example 1 and 2 were subjected to the test for peroxidase activity. Results of the POD tests are shown in the following Table 1.

Table 1 POD Activity Test Results

| POD Activity U/(g·min)) | | | | |
|---|---|---|---|---|
| | Example 1 | Comparative Example 1 | Example 2 | Comparative Example 2 |
| Aromatic plant | spring onion | spring onion | coriander | coriander |
| fresh milled | 598.5 | 592.7 | 107.3 | 108.2 |
| dried | 282.0 | 4.5 | 65.2 | 15.4 |
| Dried/Fresh | 47.1 % | 0.8 % | 60.8 % | 14.2 % |

Products prepared in both Example 1 and 2 and Comparative Example 1 and 2 were also subjected to the test for polyphenol oxidase activity. Results of the PPO tests are shown in the following Table 2.

Table 2 PPO Activity Test Results

| PPO Activity U/(g·min)) | | | | |
|---|---|---|---|---|
| | Example 1 | Comparative Example 1 | Example 2 | Comparative Example 2 |
| Aromatic plant | spring onion | spring onion | coriander | coriander |
| fresh milled | 22.2 | 22.1 | 19.2 | 19.0 |
| dried | 9.0 | 0.83 | 12.3 | 1.3 |
| Dried/Fresh | 40.5 % | 3.8 % | 64.1 % | 6.8 % |

It can be seen from Table 1 and 2 above, the aromatic plant products according to the present invention show a high POD/PPO activity compared while conventional products lose most of their POD/PPO activities (Comparative examples). Thus, much more authentic and natural aroma and flavor is guaranteed upon re-hydration when used as enzymes ensure the delivery of aromatic compounds after rehydration. Several commercial products, claiming content of onions and herbs, were purchased from local supermarkets and tested for POD/PPO enzyme activity. None of the tested samples revealed POD/PPO activity, i.e. the POD/PPO activities were below the detection limit of the assay.

Additionally, the product of the invention has proper granule size which makes the product fast dissolve into water and flavor and aroma could release instantly.

An Alliinase activity test was also made for spring onion (Example 1) which belongs to genus Allium. The result of the test is shown in Table 3 below.

Table 3 Alliinase Activity Test Results

| Alliinase Activity U/(g·min)) | | |
|---|---|---|
| | Example 1 | Comparative Example 1 |
| Aromatic plant | spring onion | spring onion |
| fresh milled | 0.110 | 0.120 |
| dried | 0.033 | 0.005 |
| Dried/Fresh | 30.0 % | 4.2 % |

It can be seen from Table 3 above, the aromatic plant products (containing Allium species) according to the present invention show a high Alliinase activity compared while conventional products lose most of their Alliinase activity (comparative examples). Thus, much more authentic and natural aroma and flavor compounds are guaranteed upon re-hydration when used as Alliinase enzyme ensures the reaction cascades of Alliin to Allicin, an authentic onion flavour compound.

## EXAMPLE 3

9 kg fresh mushroom was milled and subsequently mixed with 75 kg milled sodium chloride and 45 kg milled MSG for 2 min under 10°C. The mixture was then granulated to have a granule size of 3 mm, and fluidized bed dried for 3 min at 65 °C of hot air. The final product has a moisture content of 2.5%. The amount of spring onion was 7.0 % of wet ingredient in the recipe which corresponded to 0.75 w/w% of dry matter of the total final product.

The finished product was intensive in mushroom aroma, and re-hydrated the solution exhibited the characteristic aroma of freshly harvested and cut mushroom.

## EXAMPLE 4

4.5 kg deskinned fresh onion and 4.5 kg deskinned fresh garlic were milled and subsequently mixed with 70 kg sodium chloride and 51 kg milled MSG for 3 mins under 20°C. The mixture was then granulated to have a granule size of 4 mm, and fluidized bed dried for 60 sec at 105 °C of hot air. The final product has a moisture content of 2.5 %. The amount of spring onion was 6.9 % of wet ingredient in the recipe which corresponded to 0.74 w/w% of dry matter of the total final product.

The finished product was slightly green in color, and upon re-hydration the solution exhibited the characteristic aroma and taste of freshly cut spring onion and garlic with a slight boiled flavor component.

## EXAMPLE 5

9 kg deskinned fresh kohlrabi was milled and subsequently mixed with 70 kg milled salt and 38 kg milled MSG for 20 sec under 10°C. The mixture was then granulated to have a granule size of 4 mm, and fluidized bed dried for 1.5 min at 50 degree of hot air with recirculation. The final product has a moisture content of 2.5%. The amount of kohlrabi was 8.5 % of wet ingredient in the recipe which corresponded to 0.92 w/w% of dry matter of the total final product.

The finished product was slightly green in color, and upon re-hydration the solution exhibited the characteristic aroma and of freshly cut kohlrabi.

**Claims**

1. A method for preparing a granulated aromatic plant product consisting of aromatic plants and osmotic agent, wherein said aromatic plants account for at least 0.5 w/w% dry matter up to 48 w/w% dry matter of the product and are encapsulated in the said osmotic agents, and said product having a granulated form, the method comprising steps of:

- milling fresh aromatic plants;
- mixing the above obtained aromatic plant with osmotic agent under moisture up to 30 % and temperature of -10 to 65 degrees C, so as to form a viscous mixture;
- granulating the obtained mixture to obtain the granules;
- drying the granules to have a moisture content of 0.5 to 5.0 %;

wherein said osmotic agent is sodium chloride or MSG or a mixture thereof; and wherein said aromatic plants comprised in the final product have a peroxidase or polyphenoloxydase activity which is at least 15 % of their corresponding fresh aromatic plants.

2. The method of claim 1, wherein the duration of said mixing is 0.1 to 60 min.

3. The method of claim 1, wherein method used for said granulation process includes high shear granulation, fluidized bed granulation, extrusion-spheronization granulation, spray drying granulation, tablet compression, and roller compaction.

4. The method of claim 1, wherein said granules obtained by the granulation process have a granule size between 0.5 to 5 mm.


**Patentansprüche**

1. Verfahren zur Herstellung eines granulierten aromatischen Pflanzenprodukts, das aus aromatischen Pflanzen und osmotischem Mittel besteht, wobei die aromatischen Pflanzen mindestens 0,5 Gew.-% Trockenmasse und bis zu 48 Gew.-% Trockenmasse des Produktes ausmachen und in den osmotischen Mitteln eingekapselt sind und das Produkt eine granulierte Form aufweist, wobei das Verfahren die folgenden Schritte umfasst:

- Mahlen von frischen aromatischen Pflanzen;
- Mischen der vorstehend erhaltenen aromatischen Pflanze mit osmotischem Mittel unter Feuchtigkeit von bis zu 30 % und einer Temperatur von -10 bis 65 Grad C, um eine viskose Mischung zu bilden;
- Granulieren der erhaltenen Mischung, um das Granulat zu erhalten;
- Trocknen der Granulate, so dass sie einen Feuchtigkeitsgehalt von 0,5 bis 5,0 % aufweisen;

wobei das osmotische Mittel Natriumchlorid oder MNG oder eine Mischung davon ist; und
wobei die im Endprodukt enthaltenen aromatischen Pflanzen eine Peroxidase- oder Polyphenoloxydase-Aktivität aufweisen, die mindestens 15 % der entsprechenden frischen aromatischen Pflanzen beträgt.

2. Verfahren nach Anspruch 1, wobei die Dauer des Mischens 0,1 bis 60 Min. beträgt.

3. Verfahren nach Anspruch 1, wobei das für das Granulationsverfahren angewendete Verfahren eine Granulation mit hoher Scherung, eine Wirbelschichtgranulation, eine Extrusionssphärengranulation, eine Sprühtrocknungsgranulation, Tablettenkomprimierung und Walzenverdichtung umfasst.

4. Verfahren nach Anspruch 1, wobei die Granulate, die durch das Granulationsverfahren erhalten werden, eine Granulatgröße zwischen 0,5 und 5 mm aufweisen.


**Revendications**

1. Procédé de préparation d'un produit de plante aromatique granulé constitué de plantes aromatiques et d'agent osmotique, dans lequel lesdites plantes aromatiques représentent au moins 0,5 % en poids/poids de matière sèche jusqu'à 48 % en poids/poids de matière sèche du produit et sont encapsulées dans lesdits agents osmotiques et ledit produit ayant une forme granulée, le procédé comprenant les étapes consistant à :

- broyer des plantes aromatiques fraîches ;
- mélanger les plantes aromatiques obtenues ci-dessus avec un agent osmotique sous une humidité allant jusqu'à 30 % et une température de -10 à 65 degrés C, de manière à former un mélange visqueux ;
- effectuer une granulation du mélange obtenu pour obtenir les granulés ;
- sécher les granulés pour avoir une teneur en humidité de 0,5 à 5,0 % ;

dans lequel ledit agent osmotique est le chlorure de sodium ou le GMS ou un mélange de ceux-ci ; et
dans lequel lesdites plantes aromatiques comprises dans le produit final ont une activité peroxydase ou polyphénoloxydase qui est d'au moins 15 % de leurs plantes aromatiques fraîches correspondantes.

2. Procédé selon la revendication 1, dans lequel la durée dudit mélange est de 0,1 à 60 min.

3. Procédé selon la revendication 1, dans lequel le procédé utilisé pour ledit procédé de granulation comprend une granulation à cisaillement élevé, une granulation à lit fluidisé, une granulation par extrusion-sphéronisation, une granulation par séchage par pulvérisation, une compression de comprimé et un compactage au rouleau.

4. Procédé selon la revendication 1, dans lequel lesdits granulés obtenus par le procédé de granulation ont une dimension de granulés comprise entre 0,5 et 5 mm.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5227183 A

- GB 2114865 A